# EUROPEAN PATENT SPECIFICATION

(11) **EP 2 108 350 B1**
(45) Date of publication and mention of the grant of the patent: **12.09.2012**
(21) Application number: 08103487.8
(22) Date of filing: 10.04.2008
(51) Int. Cl.: A61G 7/10, F16B 21/02, F16B 19/02

(54) **Patient lifter and quick release coupling mechanism**
Patientenheber und schnell lösbarer Kopplungsmechanismus
Lève-personne et mécanisme de couplage à libération rapide

(43) Date of publication of application: 14.10.2009
(73) Proprietor: ETAC AS, 1501 Moss (NO)
(72) Inventor: Borgen, Tor Age, 2390 Moelv (NO)
(74) Representative: Zech, Stefan Markus

(56) References cited:
- EP-A- 1 452 478
- DE-U- 7 440 460
- DE-U1- 20 318 969

## Description

The present invention relates to a patient lifter for use in care homes, hospitals and the like. In particular, the invention further relates to a quick release coupling mechanism for use with the lifter.

In care homes, hospitals and the like, it is often the case that a patient is unable to walk or move themselves. In particular, some patients may be bed bound for whatever reason, and therefore incapable of moving from a bed to a chair, or otherwise. In order to allow a patient to be moved around the care home or hospital, wheelchairs, patient trolleys with wheels and the like are used. Sometimes, it is necessary to move the patient from a wheelchair to a trolley or the like, at which point the patient must be lifted in some way. For such tasks, a patient lifter is often used.

Patient lifters come in a variety of different guises, but a common feature is that one part of the lifter is provided with means by which it can be attached to either the patient, or a chair or trolley on which the patient rests. This is most readily achieved by having some form of patient holder which interacts by means of a harness or straps with the patient directly, or the chair/trolley on which the patient rests. Once the patient is suspended on the holding means, these means will stay with the patient until the final resting point has been reached. That is, if the patient is being lifted from a chair to a bed, it will be necessary for the holding means to be attached to the patient, and then these holding means used in conjunction with a lifting means to lift the patient out of the chair and into a waiting bed.

As will be clear, it is often necessary for the holding means to be detachably coupled with the lifting means. In other words, a patient lifter comprises a section for holding the patient which is detachable from a section for specifically lifting the patient. This clearly therefore allows for the holding means to be easily attached to the patient, and then attached to the lifting means prior to lifting. Conversely, it may be that the holding means must be attached to the lifting means first, and then the patient is attached to the holding means.

As will be clearly understood, the patient carer is often busy tending to the patient, and does not necessarily have the opportunity to connect together the holding means and the lifting means if a complicated coupling mechanism is provided. Simple coupling mechanisms are of course well known in the art, for example: some form of hook and loop is well known. Additionally, a mechanism utilising a bolt passing through aligned holes provided on the holding means and lifting means will satisfactorily couple the two parts together. In both of these designs, however, it is obvious that the carer must align both parts of the coupling means in order to couple them. Further, the simple technique of hook and eyelet can be accidentally disengaged if the coupling mechanism is not held in a stable manner. That is, nothing holds the eyelet on the hook, and an accidental knock could lead to disengagement of the holding means from the lifting means, thus leading to injury of the patient. Further drawbacks of the bolt passing through aligned holes are: that the bolt is not attached to either of the fastening means of the holding and/or lifting means, and this can lead to accidental loss of the bolt, or again unwanted disconnection of the two parts.

A known quick release coupling mechanism according to DE 74 40 460 U comprises two sections: those of a bolt and a fork coupler. The fork coupler is provided with a slot which is sized and shaped to allow the bolt to rest completely within the slot, such that the fork coupler can then freely rotate around the bolt. In order for the fork coupler and the bolt to be attached together, it is clear that in some orientations the bolt must be stopped from passing out of the slot in the fork coupler. The quick release coupling mechanism of the prior art functions by having a preset orientation at which the bolt can enter the fork coupler slot, and other orientations where the bolt cannot enter or leave the slot in the fork coupler. Such a selectable engagement is achieved by having a bolt with fastening means which leads the bolt to have a specific outline in one orientation. This particular outline also matches the entrance part of the slot in the fork coupler, such that when the bolt and fork coupler are appropriately aligned, the bolt can pass through the entrance or intake portion into the slot of the fork coupler. Once the bolt is within the slot of the fork coupler, the fork coupler can be rotated around the bolt such that the orientation of the bolt and fork coupler changes. Clearly, in this new orientation, the intake portion of the slot of the fork coupler does not coincide with the required orientation of the bolt, and thus the bolt and fork coupler are coupled together.

The current invention has been designed in order to provide a more reliable and still simple coupling means. Whilst the example of using these coupling means for a patient lifter is given, the skilled person will obviously realise that the coupling mechanism is applicable to a variety of situations wherein two sections need to be removably coupled. These coupling means are provided to allow simple engagement of the two sections to be coupled, without removable parts and further without the possibility of accidental disconnection.

A quick release coupling mechanism of the present disclosure is given in independent claim 1, wherein further advantageous aspects are presented in the dependent claims therefrom.

Thus, it is provided that the bolt (10) has two indents (11) as the fixation means (40) and the intake portion (22) of the slot (21) is shaped accordingly, such that after the bolt (10) is engaged and the fork carrier (20) is rotated, two protruding sections (24) of the fork coupler (20) overlap with two non-intended sections (14) of the bolt (10) thus improving the fastening together of the coupling mechanism (1).

One possible means of providing the bolt with this different outline, is to have the fastening means provided by one or multiple indents on the bolt. This then leads to a bolt which in one orientation does not present a completely rectangular outline, but has an outline which is nearly rectangular with the appropriate one or more indents therein. Providing the intake portion with a specific shape that interacts only with the bolt when in this chosen orientation, will allow the bolt to pass through the intake portion into the slot. Obviously after rotation of the fork coupler around the bolt, the specific shape of the intake portion will then overlay sections of the bolt which to not have the indents.

In this case, the protruding sections of the intake portion will stop the bolt from passing through the intake portion and thus exiting the slot.

In order for the above coupling mechanism to function, it is an advantage that the bolt is provided with indents of a non-symmetric nature. That is, if a bolt is provided such that the indents lead to an outline which is not symmetric along a longitudinal mirror line (the longitudinal mirror line being along the central axis of the bolt) the bolt will thus provide an outline which does not fit through the intake portion of the slot after engagement and rotation.

A further advantageous design of the bolt, is to have the bolt with multiple indents. With more than one indent on the bolt, it is clear that after engagement through the intake portion into the slot followed by rotation, multiple sections of the intake portion will overlay non-indented sections of the bolt. In particular, protrusions along the intake portion of the slot will interfere with non-indented sections of the bolt, thus stopping the bolt from disengaging from the fork coupler. Having multiple indents and multiple protrusions interacting with each other, clearly leads to a strengthening of the coupling mechanism.

In line with the above multiply indented bolts, a further design is to have two indents on the bolts positioned on either side along a diametric line of the bolt. In this case, the outline of the bolt will present a generally rectangular shape, however on the two long sides an indent will be present. It is further advantageous for the indent on each long side of the rectangular outline to be offset from one another in the longitudinal direction of the bolt axis.

The indent on the bolt as discussed above can advantageously be provided by a wedge-shape cut out of the side of the bolt. This leads to a large overlap between the long protrusion on the intake portion of the slot with the non-indented section of the bolt.

As is clear, it is advantageous in the design of the fork coupler, for the bolt to be held in a non-rotatable manner. In order to allow the bolt to be attached to some point in a non-rotational manner, rotational alignment means can be fixed on the bolt. Such means are designed to allow the bolt to be fastened to a further item in a specifically aligned way, and further so that the bolt is held in a non-rotational manner.

In order to provide these rotational interference means, it is possible to structure the end of the bolt with a non-symmetric outline. For example, the ends of the bolt could be hexagonal or square or any other non-rotational shape. Further, slots could be cut into the end of the bolt such that these slots inter-act with appropriate extensions on the items to which the bolt is fastened.

It is possible for the bolt to be fixed to a casing, with the casing being designed appropriately to fix to a further item to which the coupling means is to be attached. In this case, the outer casing can also be provided with some sort of guidance means. The guidance aspect being designed such that the end of the fork coupler is accepted through the means and is specifically directed to engage with the bolt held in the non-rotational manner in the outer casing. Clearly, provision of some form of guidance will lead to an improvement in the ease of connectability between the fork coupler and bolt.

The simplest way of providing guidance means to the outer casing, is by means of some sort of slot sized and shaped to take the end of the fork coupler provided with the intake portion and slot.

Further, it is an option in the design to provide the outer casing with some sort of rotatable sleeve. This rotatable sleeve would rotate with respect to the fixed orientation of the bolt, and could provide the guidance means for the fork coupler. If the rotatable sleeve comprises the guidance means, it allows the fork coupler to be guided directly towards the bolt, and then the two sections can be coupled together by means of rotation of the fork coupler and rotatable sleeve with guidance means.

In an outer casing provided with guidance means positioned on the rotatable sleeve, it is possible to provide some sort of biasing in order to align the rotatable sleeve in an appropriate orientation for improving the coupling between the fork coupler and bolt. As is clear from the above, the fork coupler will only pass over the bolt when the intake portion is appropriately aligned with the chosen orientation of the bolt. If the rotatable sleeve is spring-biased such that the guidance means automatically line up with this requirement orientation, it is clear that the fork coupler can be readily passed through the guidance means and will automatically align with the desired orientation on the bolt. Clearly, this provides a substantial improvement to the functioning of the coupling means, as the orientation between the fork coupler and bolt is preset by the rotatable sleeve.

In order to improve the strength of the coupling mechanism, it is advantageous for the fork coupler and bolt to be fabricated from hardened steel. Such a material is readily available, provides excellent mechanical strength and is easily workable to provide the required tolerances for the bolt and fork coupler.

Another aspect of the present disclosure relates to a patient lifter. This patient lifter being provided with two sections, one a patient holding means section and the other a lifting section. In order to allow the ready connection of the holding means to the lifting means, the quick release coupling mechanism as discussed above can be use to allow coupling between the two pieces. For example, the bolt could be attached to the lifting means, the fork coupler attached to the holding means. The holding means is provided for interacting with the patient in order to allow connection of straps, or the like, holding the patient to the lifting means.

Further, another aspect of the patient lifter could be that the outer casing described above can be attached to the lifting means, so as to hold the bolt in a non-rotational manner. In this case, the fork coupler attached to the holding means will interact with the outer casing, and therefore will be readily engageable with the bolt.
- Figure 1: shows a patient lifter comprising a quick release coupling mechanism between the two parts.
- Figure 2: shows a fork coupler according to one aspect of the coupling mechanism.
- Figure 3: details a bolt for interaction with the fork coupler seen in Figure 2.
- Figure 4: shows a cross-section through the quick release coupling mechanism incorporating features of Figures 1, 2 and 3.

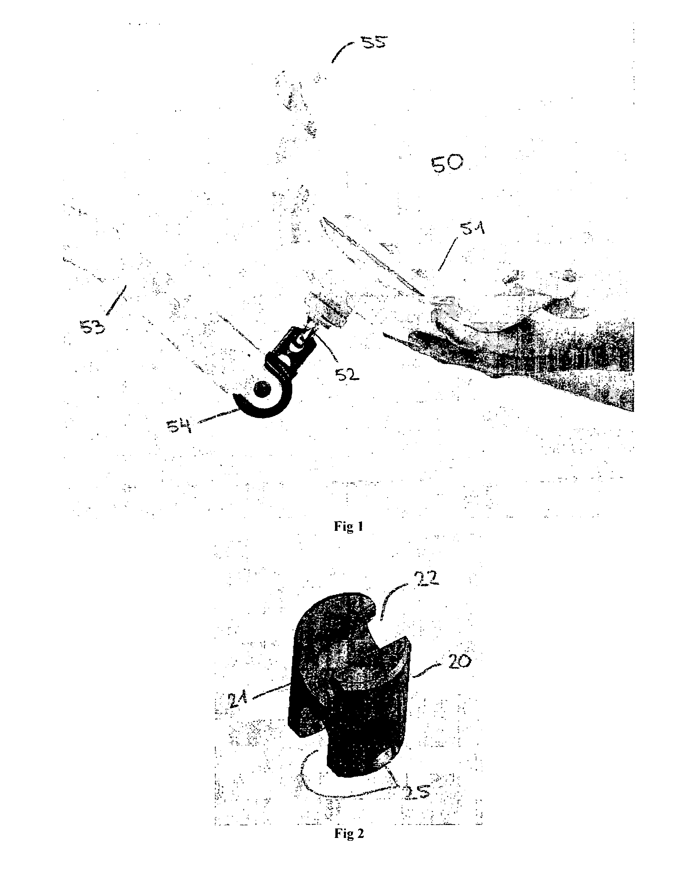

Figure 1 shows a patient lifter 50 appropriate for use in hospitals, nursing homes or the like, for supporting and lifting patients unable to move or support themselves. This lifter 50 is comprised of two key sections, in order to effect lifting of a patient. Firstly, a holding means 51 is provided which interacts in some way with the patient requiring lifting. In particular, as can be seen in Figure 1, the holding means 51 is provided with a series of hooks 55 to hold and connect with straps, or the like, which are in some way attached to the patient or a carrier thereof. Obviously the hooks 55 are merely one example for the holding means 51, and any form of removable connector for attachment of the patient or carrying means thereof is considered equivalent. The further key section of the patient lifter 50 is that of a lifting means 53. As is shown in the figure, the lifting means 53 is most simply provided by a rigid arm which can either be fixedly attached to a wall or the like in a patient care home, or could be attached to a lifting frame (not shown). It will be quite clear that it is often necessary to interchange the holding means 51 in the patient lifter 50 depending upon which patient requires lifting. In order to facilitate the swapping of the holding means 51 for the same lifting means 53, a quick release coupling mechanism 1 as described below is conceived.

The quick release coupling mechanism 1 is specifically designed to allow for a simple mechanism of holding together two separate bodies, in the example given above: the holding means 51 and the lifting means 53 of a patient lifter 50. Further, it is desirous for the quick release coupling mechanism 1 to comprise no separate parts which must be inserted or removed from the coupling means 1. In particular, a simple coupling means comprising a hole through a plate-type member and bolt is known, but the bolt is threaded through the hole in order to hold the two parts together. Whilst this is clearly a very simple coupling mechanism, it does require the insertion and removal of a bolt, which is not always possible if the user requires two hands for holding one of the items to be connected together. The quick release coupling mechanism 1 of the present disclosure overcomes such a disadvantage by comprising two sections which remain fixedly attached to the two parts which require connecting together.

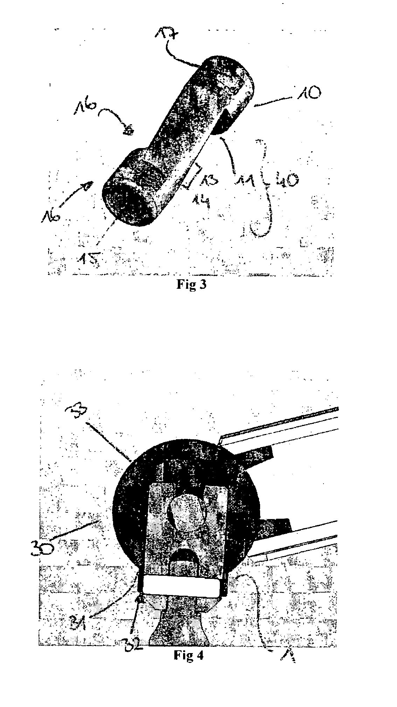

Figures 2, 3 and 4 show individual parts of the quick release coupling mechanism 1. In Figure 2, a fork coupler 20 is shown; Figure 3 shows a bolt 10; Finally, Figure 4 shows the fork coupler 20 and bolt 10 interacting with each other, and being surrounded by an outer casing 30. The quick release coupling mechanism 1 of the present disclosure is formed such that the fork coupler 20 and bolt 10 can be connected together and disengaged in only one orientation, and such that in any other orientation the bolt 10 and fork coupler 20 are held together.

In particular, the quick release coupling mechanism 1 is designed such that the bolt 10 can only fit within the fork coupler 20 when the fork coupler 20 is presented to the bolt 10 in one orientation. After engagement of the bolt 10 within the fork coupler 20, a simple rotation of the fork coupler 20 around the bolt 10 leads to the two sections of the quick release coupling mechanism 1 being fastened together.

As can be seen in Figures 2 and 3, this mechanism of coupling is provided by the bolt 10 having at least one fixation means 40 along a section of its length 13. These fixation means 40 lead to the bolt 10 having a specific outline in certain orientations. In order to allow the fork coupler 20 to slide over the bolt 10, the fork coupler is provided with a slot 21. The slot 21 is provided with the same diameter as the diameter of the bolt 10, such that the fork coupler 20 can rotate around the bolt 10 when the bolt 10 is held within the slot 21. Giving access to the slot 21 of the fork coupler 20, is an intake portion 22 which allows the bolt 10 to slide into the slot 21. In particular, the intake portion 22 is provided with the appropriate shape of the bolt 10 with the fixation means 40. That is, in one orientation of the bolt 10 the fixation means 40 leads to a specific outline of the bolt 10. The intake portion 22 of the slot 21 is shaped such that in this particular orientation the intake portion 22 will slide over the bolt 10, such that the bolt 10 will be held in the slot 21. Once the bolt 10 is in the slot 21, the slot 21 is large enough to allow the fork coupler 20 to rotate around the central axis 15 of the bolt 10. After rotation of the fork coupler 20 around the bolt 10, the intake portion 22 will not allow the bolt 10 to pass there-through, as a result of the fixation means 40. In other words, after rotation of the fork coupler 20, the intake portion 22 is misaligned with the appropriate outline of the bolt 10 and fixation means 40, therefore stopping the bolt 10 from passing through the misaligned intake portion 22.

As can be seen in Figure 3, the fixation means 40 of the bolt 10 can be provided by an indent 11. In the bolt 10 of Figure 3, two indents 11 are shown in the bolt 10. Whilst the indents 11 are shown as wedge-shaped indents 17 in the figure, this is once again not the only possible shape for the indent 11, and indeed any indent leading to a different outline to the bolt 10 can be accommodated. The key feature to the bolt 10 and indent 11 or fixing means 40, is that in one orientation the outline of the bolt 10 differs from any other orientation, and that in this specific orientation the intake portion 22 of the slot 21 is identical. In any other orientation of the bolt 10 with relation to the fork coupler 20, the intake portion 22 does not identically match the outline of the bolt 10, and also will not allow the bolt 10 to pass through to the slot 21.

Returning to Figure 3, it is clear that the indent 11 will lead to a bolt with a specific outline. The fork coupler 20 as shown in Figure 2, is also shown with the intake portion 22 leading to the slot 21 with a size and shape identically matching the outline of the bolt 10. In the cases shown in Figures 2 and 3, the bolt 10 comprises two indents 11, and the intake portion 22 on the fork coupler 20 comprises a slanted intake portion 22 into the slot 21, thus allowing the fork coupler 20 to slide over the bolt 10 when in the appropriate orientation. Once the bolt 10 is within the slot 21 of the fork coupler 20, it is quite clear that rotating the fork coupler 20 will stop the bolt 10 from passing out of the slot 21 through the intake portion 22. In the particular example shown in Figures 2 and 3, a protruding section 24 shown at the edge of the intake portion 22 will begin to overlap with the bolt 10 in a portion of the bolt 10 which is not provided by an indent 11, i.e. it is a non-indented section 14. As will now be clear, once the fork coupler 20 begins to rotate around the bolt 10 held in its slot 21, the protruding sections or section 24 on the fork coupler 20 will stop the disengagement of the fork coupler 20 from the bolt 10. Clearly, therefore, this simple mechanism provides the desired quick release coupling mechanism 1, in that the fork coupler 20 can be slid over the bolt 10 in one orientation only, and then after rotation of the fork coupler 20 the fork coupler 20 cannot be disengaged from the bolt 10.

In order to ensure a satisfactory operation of the bolt 10 and fork coupler 20, it is desirable that the rotational tolerance between the correct alignment of the bolt 10 and fork coupler 20 be quite small. In particular, it is desirable that the slot 21 of the fork coupler 20 is appropriately sized and shaped such that it will only accept the bolt 10 if the bolt 10 is rotationally aligned, along its central longitudinal axis 15, to within a small tolerance. This tolerance is preferably less than 8° of misalignment; it is more preferably less than 5° of misalignment and is still more preferably less than 3° of misalignment. With such a tight tolerance, it is clear that the operation of the device will be greatly improved, and the strength of the holding between the bolt 10 and fork coupler 20 will also be improved.

Turning to Figure 1, it is clear therefore that in the orientation shown, it is possible for the intake portion 22 to slide over the bolt 10, thus allowing the bolt 10 into the slot 21. Once the bolt 10 is fully within the slot 21, the holding means 51, to which the fork coupler 20 is attached by means of a first fastening section 52, can all be rotated around the central axis 15 of the bolt 10, therefore causing the protruding sections or section 24 of the intake portion 22 to overlap with non-indented sections 14 of the bolt 10, therefore holding together the holding means 51 and lifting means 53.

As has been explained above, it is not necessary to provide the exact shape of bolt 10 and fork coupler 20 as shown in the figures. It is clearly advantageous, that the outline of the bolt 10 when considering the fixation means 40 must be asymmetric either side of the central axis 15. When this is the case, the intake portion 22 will always overly some non-indented section 14 of the bolt 10 after a rotation, thus stopping the two from coming apart.

The example of fork coupler 20 and bolt 10 shown in Figures 2 and 3, is an advantageous embodiment. Clearly this particular design leads to two protruding sections 24 of the fork coupler 20 overlaying two non-indented sections 14 of the bolt 10 after rotation of the fork coupler 20. This gives a secure and strong connection between the fork coupler 20 and the bolt 10. In particular, the bolt 10 shown in Figure 3 is possessed of two indents 11 which are on either side of the bolt 10, and are in fact diametrically opposite. Further, the indents are offset in the longitudinal direction 16, thus leading to an asymmetric profile of the bolt 10.

In this particular advantageous design, the angle which the indents 11 of the bolt 10 make, when measured in relation to the central axis of the bolt 15, is preferably in the range of 3° to 15°; more preferably in the range of 5° to 13° and more preferably still in the range of 8° to 11°.

Clearly, it is advantageous for the bolt 10 to remain in a non-rotational state after the fork coupler 20 has been slid over the bolt 10 and is rotating around the central axis 15 thereof. It is useful for the bolt 10 to remain fixed during the rotation of the fork coupler 20, otherwise the use of the rotationally selective intake portion 22 and specific outline of the bolt 10 will not lead to a satisfactory coupling. In order to ensure that the bolt 10 can readily be fixed in a non-rotational manner, the bolt 10 may be provided by a rotation stopping means 18. The rotation stopping means 18 interacts with some outer casing 30 and therefore holds the bolt 10 in a rotational alignment with the outer casing 30. As can be seen in Figure 1, it is also possible for the bolt 10 to be held within a further item, in this case the lifting means 53, in a non-rotational manner. Figure 3 shows the rotation stopping means 18 as being two slots which interact with the outer casing 30 or other means, for example lifting means 53. Obviously, it is also possible for the rotation stopping means 18 to be provided by any structure, for example the bolt 10 could be provided with hexagonally or square-shaped ends to the bolt 10. In this case, it is clear that the rotation stopping means 18 need to be positioned away from the section of the bolt 10 which will interact with the fork coupler 20. It is quite clear that any means of stopping a rotation of the bolt 10 can be conceived, and this is not intended as a particularly limiting feature.

As can be seen in Figures 1 and 4, the quick release coupling mechanism 1 may also be provided by an outer casing 30. In the case of Figure 4, the outer casing 30 is shown interacting with a further item to which the coupling is required. For example, the outer casing 30 could be provided at the end of the arm of the lifting means 53 as shown in Figure 1. It is of advantage if the outer casing 30 is provided with a mechanism to interact with the bolt 10 through the rotation stopping means 18. In other words, the outer casing 30 may be responsible for holding the bolt 10 in a non-rotational fashion.

As can also be seen in Figure 4, it is advantageous for the outer casing 30 to be provided with some form of guidance means 31. In this case, the guidance means 31 are intended to specifically guide the fork coupler 20 toward the bolt 10. The guidance means 31 would advantageously be shaped and sized to receive the intake portion 22 end of the fork coupler 20 and guide the intake portion 22 toward the bolt 10. Such guidance means 31 would obviously improve the usability of the quick release coupling mechanism 1, in that the fork coupler 20 would be directly guided to the bolt 10, and this would dramatically ease and improve the usability of the quick release coupling mechanism 1. Clearly, with the guidance means 31 the intake portion 22 will be presented to the bolt 10 relatively well aligned, and therefore will improve the connectability between the fork coupler 20 and bolt 10.

It is advantageously conceived that the outer casing 30 will have guidance means 31 provided by a guidance slot 32. This slot 32 would be so shaped as to receive the fork coupler 20. Further advantageously, the guidance means 31 could be located on some form of rotatable sleeve 33 of the outer casing 30. This rotatable sleeve 33 would allow the guidance means 31 to rotate around the central axis 15 of the bolt 10. In this manner, the guidance means 31 will move with the fork coupler 20, thereby readily allowing the fork coupler 20 to be engaged with the bolt 10 and then rotated to give the coupling engagement.

With an outer casing 30 providing guidance means 31 and a rotatable sleeve 33, a further advantageous embodiment is conceivable to improve the coupling of the fork coupler 20 and bolt 10. If the rotatable sleeve 33 were to be mounted by means of a spring or other rotational biasing means, the guidance means 31 on the rotatable sleeve 33 could always be rotationally biased toward the engagement orientation of the intake portion 22 and the bolt 10. That is, when the fork coupler 20 is not in engagement with the bolt 10, the biasing of the rotatable sleeve 33 will provide the guidance means 31 at the precise orientation to readily allow the intake portion 22 to pass over the bolt 10 such that it can enter the slot 21. This will obviously dramatically improve the functionality of the quick release coupling mechanism 1, as it will not be necessary to try and properly orient the fork coupler 20 with relation to the bolt 10, as the guidance means 31 will automatically lead the fork coupler 20 to the bolt 10 in such an orientation that the intake portion 22 will slide over the bolt 10. After the fork coupler 20 is positioned over the bolt 10, the rotation of the fork coupler 20 around the bolt 10 will be readily allowed by means of the rotatable sleeve 33. In other words, the biasing would not be too strong to stop the rotational engagement.

The fork coupler 20 and bolt 10 of the quick release coupling mechanism 1 are advantageously provided out of hardened steel. This material is particularly durable, and shows the required mechanical strength to allow the coupling to hold the weight attached to the fork coupler 20. Additionally, the fork coupler 20 may be provided with a further fixing means 25 which can be attached other items. As seen in Figure 1, the fixing means 25 of the fork coupler 20 are attached to a first fixing section 52 of the patient lifter 50. Any conceivable means for this fixing mechanism is acceptable, as it is intended that the fork coupler 20 be attached to a further item in a semi-permanent and mechanically sound way.

The above description of the quick release coupling mechanism 1 and patient lifter 50 is given by way of example. It is conceivable for many of the features of the bolt 10, the fork coupler 20 and the outer casing 30 to be interchangeable, and indeed the skilled person will readily appreciate which features are especially desired for the quick release coupling mechanism 1. Additionally, whilst the coupling mechanism 1 is discussed with relation to a patient lifter 50, this is also by way of example. Indeed, the quick release coupling mechanism 1 can readily be applied to a variety of tasks wherein the fork coupler 20 and bolt 10 can be attached to further items, and perhaps wherein these further items need to be occasionally connected together.

### List of Reference Numerals:

- 1: Quick Release Coupling Mechanism
- 10: Bolt
- 11: Indent
- 12: Protrusion
- 13: Section of length
- 14: Non-indented section
- 15: Central Axis
- 16: Longitudinal Direction
- 17: Wedge shaped indents
- 18: Rotation stopping means
- 20: Fork Coupler
- 21: Slot
- 22: Intake portion
- 23: Fastening means
- 24: Protruding section
- 25: Fixing means
- 30: Outer casing
- 31: Guidance means
- 32: Guidance slot
- 33: Rotatable Sleeve
- 40: Fixation means
- 50: Patient lifter
- 51: Holding means
- 52: 1^{st} Fastening section
- 53: Lifting means
- 54: 2^{nd} Fastening section
- 55: Hooks

## Claims

1. A quick release coupling mechanism (1) comprising:
a bolt (10) and a fork coupler (20),
wherein the bolt (10) has at least one fixation means (40) along a section of its length (13) and the fork coupler (20) has a slot (21) therein which has an intake portion (22) with the same shape as the outline of the bolt (10),
the bolt (10) and intake portion (22) are shaped such that the bolt (10) will only fit through the intake portion (22) of the slot (21) in the fork coupler (20) in one orientation, and that after engagement and rotation of the fork coupler (20) around the bolt (10), the bolt (10) cannot pass through the intake portion (22) of the slot (21) in the fork coupler (20),
**characterized in that**
the bolt (10) has two indents (11) as the fixation means (40) and the intake portion (22) of the slot (21) is shaped accordingly,
such that after the bolt (10) is engaged and the fork carrier (20) is rotated, two protruding sections (24) of the fork coupler (20) overlap with two non-indented sections (14) of the bolt (10) thus improving the fastening together of the coupling mechanism (1).

2. The coupling mechanism (1) according to claim 1, wherein the shape of the intake portion (22) presents at least one protruding section (24) extending over the slot (21) which matches the size and shape of at least one indent (11) in the bolt (10) making up the fixation means (10), such that after engagement and rotation around the bolt (10) the protruding section (24) stops disengagement of the bolt (10) by being aligned with a non-indented section (14) of the bolt (10).

3. The coupling mechanism (1) according to either of claims 1 or 2, wherein the bolt (10) comprises one or more indents (11) as the fixation means (40) which give the bolt (10) an asymmetric outline in particular either side of the central axis (15) of the bolt (10).

4. The coupling mechanism (1) of either of claims 2 or 3, wherein the angle that the one or more indents (11) make in relation to the central axis of the bolt (15), is in the range of 3° to 15°; more preferably in the range of 5° to 13° and more preferably still in the range of 8° to 11°.

5. The coupling mechanism (1) according to any one of the preceding claims, wherein the two indents (11) are located on either side of the central axis (15) of the bolt (10) diametrically opposite each other but offset in the longitudinal direction (16) of the bolt (10).

6. The coupling mechanism (1) according to any one of the preceding claims, wherein one or more indents (11) are in the shape of wedge shaped indents (17) cut out of the bolt (10).

7. The coupling mechanism (1) according to claim 1, wherein the bolt (10) is stopped from disengaging through the intake portion (22) of the slot (21) by means of at least one protrusion (12) on the bolt making up the fixation means (40), wherein the at least one protrusion (12) interacts with fastening means (23) in the fork coupler (20) sized so as to stop the protrusion (12) from passing through the intake portion (22) of the slot (21) after engagement and rotation of the fork coupler (20) around the bolt (10).

8. The coupling mechanism (1) of any of the preceding claims, wherein the rotational misalignment tolerance of the bolt (10) with respect to the fork coupler (20) for allowing the fork coupler (20) to engage with the bolt (10) is preferably less than 8° of misalignment; it is more preferably 5° of misalignment and is still more preferably 3° of misalignment.

9. The coupling mechanism (1) according to any one of the preceding claims, wherein the bolt (10) has rotation stopping means (18) for attachment to an outer casing (30), so that the bolt (10) is held in a non-rotational manner with respect to the outer casing (30).

10. The coupling mechanism (1) according to claim 9, wherein the rotation stopping means (18) are positioned away from the fixation means (40) and are one or more of: hexagonally structured ends to the bolt (10), square structured ends to the bolt (10), slots positioned towards to the ends of the bolt (10).

11. The coupling mechanism (1) according to either of claims 9 or 10, wherein the outer casing (30) is provided with guidance means (31) which are shaped and sized to receive the end of the fork coupler (20) provided with the slot (21), wherein the guidance means (31) are located so as to ensure that the intake portion (22) accurately lines up with the bolt (10) to improve connectability.

12. The coupling mechanism (1) according to claim 11, wherein the guidance means (31) is provided by a guidance slot (32).

13. The coupling mechanism (1) according to any one of claims 9 to 12, wherein the guidance means (31) form part of a rotatable sleeve (33), such that the guidance means (31) can be rotated relative to the remaining sections of the outer casing (30) and around the central axis (15) of the bolt (10).

14. The coupling mechanism according to claim 13, wherein the rotatable sleeve (33) is provided with a spring bias which is adapted to orient the guidance means (31) in an appropriate alignment so that the intake portion (22) of the slot (21) of the fork coupler (20) will be exactly aligned with the bolt (10) in the exact orientation required for the intake portion (22) to fit over the bolt (10).

15. The coupling mechanism (1) according to any one of the preceding claims, wherein one or both of the bolt (10) and/or fork coupler (20) are fabricated from hardened steel.

16. The coupling mechanism (1) according to any one of the preceding claims, wherein the fork coupler (20) is provided with further fixing means (25) to allow attachment of the coupling mechanism (1) to a further product.

17. A patient lifter (50) comprising:
holding means (51) for securely holding a patient requiring lifting, lifting means (53) for lifting the patient and the quick release coupling mechanism (1) according to any one of the previous claims, wherein
the holding means (51) further comprise a first fastening section (52) for attachment to the fork coupler (20) of the coupling mechanism (1) and
the lifting means (53) further comprise a second fastening section (54) for attachment of the bolt (10) of the coupling mechanism (1) in a non-rotatable manner.

18. The patient lifter (50) according to claim 17, wherein the second fastening section (54) comprises the outer casing (30) of any one of claims 8 to 13, wherein the bolt (10) is held in a non-rotatable manner with respect to both the lifting means (53) and the outer casing (30).

## Patentansprüche

1. Schnelltrennkupplungsmechanismus (1), Folgendes umfassend:
einen Riegel (10) und eine Gabelkupplung (20),
wobei der Riegel (10) mindestens eine Fixierungseinrichtung (40) entlang eines Abschnitts seiner Länge (13) hat, und die Gabelkupplung (20) einen Schlitz (21) in sich hat, der einen Aufnahmeabschnitt (22) mit derselben Form wie der Umriss des Riegels (10) hat,
wobei der Riegel (10) und der Aufnahmeabschnitt (22) derart geformt sind, dass der Riegel (10) nur in einer Ausrichtung durch den Aufnahmeabschnitt (22) des Schlitzes (21) in der Gabelkupplung (20) hineinpasst, und dass nach einem Angriff und einer Drehung der Gabelkupplung (20) um den Riegel (10), der Riegel (10) nicht durch den Aufnahmeabschnitt (22) des Schlitzes (21) in der Gabelkupplung (20) hindurchgehen kann,
**dadurch gekennzeichnet, dass**
der Riegel (10) zwei Ausschnitte (11) als Fixierungseinrichtungen (40) hat und der Aufnahmeabschnitt (22) des Schlitzes (21) entsprechend geformt ist,
so dass, nachdem der Riegel (10) in Eingriff und die Gabelkupplung (20) gedreht ist, zwei vorstehende Abschnitte (24) der Gabelkupplung (20) zwei nicht mit Ausschnitten versehene Abschnitte (14) des Riegels (10) überlagern, wodurch der feste Zusammenhalt des Kupplungsmechanismus (1) verbessert wird.

2. Kupplungsmechanismus (1) nach Anspruch 1, wobei die Form des Aufnahmeabschnitts (22) mindestens einen vorstehenden Abschnitt (24) aufweist, der sich über den Schlitz (21) erstreckt, der mit der Größe und Form mindestens eines die Fixierungseinrichtungen (40) ausmachenden Ausschnitts (11) im Riegel (10) übereinstimmt, derart, dass der vorstehende Abschnitt (24) nach einem Angriff und einer Drehung um den Riegel (10) eine Freisetzung des Riegels (10) stoppt, indem er mit einem nicht mit Ausschnitten versehenen Abschnitt (14) des Riegels (10) ausgerichtet ist.

3. Kupplungsmechanismus (1) nach einem der Ansprüche 1 oder 2, wobei der Riegel (10) einen oder mehrere Ausschnitt/e (11) als Fixierungseinrichtungen (40) umfasst, die dem Riegel (10) insbesondere auf jeder Seite der Mittelachse (15) des Riegels (10) einen asymmetrischen Umriss verleihen.

4. Kupplungsmechanismus (1) nach einem der Ansprüche 2 oder 3, wobei der Winkel, den der eine oder die mehreren Ausschnitt/e in Bezug auf die Mittelachse des Riegels (15) bilden, im Bereich von 3° bis 15°, bevorzugter im Bereich von 5° bis 13°, und noch bevorzugter im Bereich von 8° bis 11° liegt.

5. Kupplungsmechanismus (1) nach einem der vorhergehenden Ansprüche, wobei sich die zwei Ausschnitte (11) einander diametral entgegengesetzt aber in der Längsrichtung (16) des Riegels (10) versetzt auf jeder Seite der Mittelachse (15) des Riegels (10) befinden.

6. Kupplungsmechanismus (1) nach einem der vorhergehenden Ansprüche, wobei ein oder mehrere Ausschnitt/e (11) in der Form von aus dem Riegel (10) ausgeschnittenen keilförmigen Ausschnitten (17) vorliegt/vorliegen.

7. Kupplungsmechanismus (1) nach Anspruch 1, wobei der Riegel (10) von einer Freisetzung durch den Aufnahmeabschnitt (22) des Schlitzes (21) hindurch mittels mindestens eines die Fixierungseinrichtungen (40) ausmachenden Vorsprungs (12) am Riegel abgehalten wird, wobei der mindestens eine Vorsprung (12) mit Befestigungseinrichtungen (23) in der Gabelkupplung (20) zusammenwirkt, die dazu bemessen sind, den Vorsprung (12) davon abzuhalten, nach einem Angriff und einer Drehung der Gabelkupplung (20) um den Riegel (10), durch den Aufnahmeabschnitt (22) des Schlitzes (21) hindurchzugehen.

8. Kupplungsmechanismus (1) nach einem der vorhergehenden Ansprüche, wobei die Drehfehlausrichtungstoleranz des Riegels (10) im Hinblick auf die Gabelkupplung (20), um die Gabelkupplung (20) mit dem Riegel (10) in Eingriff gelangen zu lassen, vorzugsweise weniger als 8° Fehlausrichtung, bevorzugter weniger als 5° Fehlausrichtung, und noch bevorzugter weniger als 3° Fehlausrichtung beträgt.

9. Kupplungsmechanismus (1) nach einem der vorhergehenden Ansprüche, wobei der Riegel (10) Drehstoppeinrichtungen (18) zur Anbringung an einem Außengehäuse (30) hat, so dass der Riegel (10) im Hinblick auf das Außengehäuse (30) auf eine nicht drehbewegliche Weise gehalten ist.

10. Kupplungsmechanismus (1) nach Anspruch 9, wobei die Drehstoppeinrichtungen (18) von den Fixierungseinrichtungen (40) beabstandet angeordnet und hexagonal am Riegel (10) angeformte Enden und/oder quadratisch am Riegel (10) angeformte Enden und/oder zu den Enden des Riegels (10) hin befindliche Schlitze sind.

11. Kupplungsmechanismus (1) nach einem der Ansprüche 9 oder 10, wobei das Außengehäuse (30) mit Führungseinrichtungen (31) versehen ist, die zur Aufnahme des mit dem Schlitz (21) versehenen Endes der Gabelkupplung (20) geformt und bemessen sind, wobei die Führungseinrichtungen (31) so angeordnet sind, dass sie sicherstellen, dass sich der Aufnahmeabschnitt (22) genau mit dem Riegel (10) ausrichtet, um die Verbindungsfähigkeit zu verbessern.

12. Kupplungsmechanismus (1) nach Anspruch 11, wobei die Führungseinrichtungen (31) durch einen Führungsschlitz (32) bereitgestellt werden.

13. Kupplungsmechanismus (1) nach einem der Ansprüche 9 bis 12, wobei die Führungseinrichtungen (31) Teil einer drehbeweglichen Muffe (33) sind, derart, dass die Führungseinrichtungen (31) in Bezug auf die übrigen Abschnitte des Außengehäuses (30) und um die Mittelachse (15) des Riegels (10) gedreht werden können.

14. Kupplungsmechanismus (1) nach Anspruch 13, wobei die drehbewegliche Muffe (33) mit einer Federvorspannung versehen ist, die angepasst ist, die Führungseinrichtungen (31) in einer geeigneten Ausrichtung so auszurichten, dass der Aufnahmeabschnitt (22) des Schlitzes (21) des Gabelkupplung (20) genau mit dem Riegel (10) in der genauen Ausrichtung ausgerichtet wird, die für den Aufnahmeabschnitt (22) erforderlich ist, um über den Riegel (10) zu passen.

15. Kupplungsmechanismus (1) nach einem der vorhergehenden Ansprüche, wobei der Riegel (10) und/oder die Gabelkupplung (20) aus gehärtetem Stahl hergestellt ist/sind.

16. Kupplungsmechanismus (1) nach einem der vorhergehenden Ansprüche, wobei die Gabelkupplung (20) mit weiteren Fixierungseinrichtungen (25) versehen ist, um eine Anbringung des Kupplungsmechanismus (1) an einem weiteren Produkt zu ermöglichen.

17. Patientenhebevorrichtung (50), Folgendes umfassend:
Halteeinrichtungen (51), um einen Patienten sicher zu halten, der eines Anhebens bedarf, Hebeeinrichtungen (53) zum Anheben des Patienten, und den Schnelltrennkupplungsmechanismus (1) nach einem der vorhergehenden Ansprüche, wobei
die Halteeinrichtungen (51) darüber hinaus einen ersten Befestigungsabschnitt (52) zum Anbringen an der Gabelkupplung (20) des Kupplungsmechanismus (1) umfassen, und
die Hebeeinrichtungen (53) darüber hinaus einen zweiten Befestigungsabschnitt (54) zum Anbringen des Riegels (10) des Kupplungsmechanismus (1) in einer nicht drehbeweglichen Weise umfassen.

18. Patientenhebevorrichtung (50) nach Anspruch 17, wobei der zweite Befestigungsabschnitt (54) das Außengehäuse (30) nach einem der Ansprüche 8 bis 13 umfasst, wobei der Riegel (10) auf eine nicht drehbewegliche Weise im Hinblick sowohl auf die Hebeeinrichtungen (53) als auch das Außengehäuse (30) gehalten ist.

## Revendications

1. Mécanisme de couplage à libération rapide (1) comprenant :
un boulon (10) et un coupleur à fourche (20),
où le boulon (10) comporte au moins un moyen de fixation (40) le long d'une partie de sa longueur (13) et le coupleur à fourche (20) comporte une encoche (21) qui présente une partie d'admission (22) de même forme que le contour du boulon (10),
le boulon (10) et la partie d'admission (22) sont formés de façon que le boulon (10) entre uniquement dans un sens par la partie d'admission (22) de l'encoche (21) dans le coupleur à fourche (20), et qu'après engagement et rotation du coupleur à fourche (20) autour du boulon (10), le boulon (10) ne puisse passer par la partie d'admission (22) de l'encoche (21) dans le coupleur à fourche (20),
**caractérisé en ce que**
le boulon (10) présente deux renfoncements (11) faisant office de moyen de fixation (40) et la partie d'admission (22) de l'encoche (21) est formée en conséquence,
de sorte qu'après que le boulon (10) est engagé et que le coupleur à fourche (20) a tourné, deux parties en saillie (24) du coupleur à fourche (20) chevauchent deux parties non renfoncées (14) du boulon (10), améliorant de ce fait la fixation du mécanisme de couplage (1).

2. Le mécanisme de couplage (1) selon la revendication 1, où la forme de la partie d'admission (22) présente au moins une partie en saillie (24) qui s'étend au-delà de l'encoche (21), qui est adaptée à la taille et à la forme d'au moins un renfoncement (11) dans le boulon (10) constituant le moyen de fixation (40), de sorte qu'après engagement et rotation autour du boulon (10), la partie en saillie (24) empêche le désengagement du boulon (10) en étant alignée avec une partie non renfoncée (14) du boulon (10).

3. Le mécanisme de couplage (1) selon l'une des revendications 1 ou 2, où le boulon (10) comprend un ou plusieurs renfoncements (11) faisant office de moyen de fixation (40), qui donnent au boulon (10) un contour asymétrique, en particulier de chaque côté de l'axe médian (15) du boulon (10).

4. Le mécanisme de couplage (1) selon l'une des revendications 2 ou 3, où l'angle que l'un ou plusieurs renfoncements (11) décrivent par rapport à l'axe médian (15) du boulon (10) est compris entre 3° et 15°, de préférence entre 5° et 13°, et encore plus préférablement entre 8° et 11°.

5. Le mécanisme de couplage (1) selon l'une quelconque des revendications précédentes, où les deux renfoncements (11) sont situés de chaque côté de l'axe médian (15) du boulon (10) de manière diamétralement opposée l'un à l'autre mais en décalage dans le sens longitudinal (16) du boulon (10).

6. Le mécanisme de couplage (1) selon l'une quelconque des revendications précédentes, où un ou plusieurs renfoncements (11) ont la forme de renfoncements en forme de coins (17) découpés dans le boulon (10).

7. Le mécanisme de couplage (1) selon la revendication 1, où le boulon (10) est empêché de se désengager via la partie d'admission (22) de l'encoche (21) au moyen d'au moins une saillie (12) sur le boulon (10) constituant le moyen de fixation (40), où l'au moins une saillie (12) interagit avec un moyen d'attache (23) dans le coupleur à fourche (20) dimensionné de manière à empêcher la saillie (12) de passer par la partie d'admission (22) de l'encoche (21) après engagement et rotation du coupleur à fourche (20) autour du boulon (10).

8. Le mécanisme de couplage (1) selon l'une quelconque des revendications précédentes, où la tolérance au désalignement en rotation du boulon (10) par rapport au coupleur à fourche (20) pour permettre au coupleur à fourche (20) de s'engager avec le boulon (10) est de préférence inférieure à 8° de désalignement, plus préférablement de 5° de désalignement et encore plus préférablement de 3° de désalignement.

9. Le mécanisme de couplage (1) selon l'une quelconque des revendications précédentes, où le boulon (10) comporte des moyens de blocage en rotation (18) pour l'attache à un boîtier extérieur (30), de sorte que le boulon (10) soit maintenu d'une manière non rotative par rapport au boîtier extérieur (30).

10. Le mécanisme de couplage (1) selon la revendication 9, où les moyens de blocage en rotation (18) sont positionnés à l'écart du moyen de fixation (40) et sont l'un ou plusieurs des éléments suivants : extrémités de forme hexagonale du boulon (10), extrémités de forme carrée du boulon (10), encoches positionnées vers les extrémités du boulon (10).

11. Le mécanisme de couplage (1) selon l'une des revendications 9 ou 10, où le boîtier extérieur (30) est pourvu de moyens de guidage (31) qui sont formés et dimensionnés pour recevoir l'extrémité du coupleur à fourche (20) pourvu de l'encoche (21), où les moyens de guidage (31) sont situés de façon à assurer que la partie d'admission (22) est en alignement exact avec le boulon (10) afin d'améliorer la connectabilité.

12. Le mécanisme de couplage (1) selon la revendication 11, où le moyen de guidage (31) est constitué par une encoche de guidage (32).

13. Le mécanisme de couplage (1) selon l'une quelconque des revendications 9 à 12, où les moyens de guidage (31) forment une partie d'un manchon rotatif (33) de sorte que les moyens de guidage (31) peuvent tourner par rapport aux parties restantes du boîtier extérieur (30) et autour de l'axe médian (15) du boulon (10).

14. Le mécanisme de couplage (1) selon la revendication 13, où le manchon rotatif (33) est pourvu d'une contrainte élastique qui est apte à orienter les moyens de guidage (31) dans un alignement approprié de sorte que la partie d'admission (22) de l'encoche (21) du coupleur à fourche (20) soit exactement alignée avec le boulon (10) dans l'orientation exacte nécessaire pour que la partie d'admission (22) s'ajuste par rapport au boulon (10).

15. Le mécanisme de couplage (1) selon l'une quelconque des revendications précédentes, où le boulon (10) et/ou le coupleur à fourche (20) sont fabriqués en acier trempé.

16. Le mécanisme de couplage (1) selon l'une quelconque des revendications précédentes, où le coupleur à fourche (20) est pourvu de moyens de fixation (25) supplémentaires pour permettre l'attache du mécanisme de couplage (1) à un produit supplémentaire.

17. Lève-patient comprenant :
des moyens de maintien (51) permettant de maintenir fermement un patient devant être soulevé, des moyens de levage (53) permettant de soulever le patient et le mécanisme de couplage à libération rapide (1) selon l'une quelconque des revendications précédentes, où
les moyens de maintien (51) comprennent en outre une partie d'attache rapide (52) pour l'attache au coupleur à fourche (20) du mécanisme de couplage (1) et
les moyens de levage (53) comprennent en outre une deuxième partie d'attache (54) pour l'attache du boulon (10) du mécanisme de couplage (1) d'une manière non rotative.

18. Le lève-patient (50) selon la revendication 17, où la deuxième partie d'attache (54) comprend le boîtier extérieur (30) de l'une quelconque des revendications 8 à 13, où le boulon (10) est maintenu d'une manière non rotative à la fois par rapport aux moyens de levage (53) et au boîtier extérieur (30).
